# EUROPÄISCHE PATENTSCHRIFT

(11) **EP 3 527 394 B1**
(45) Veröffentlichungstag und Bekanntmachung des Hinweises auf die Patenterteilung: **07.04.2021**
(21) Anmeldenummer: 19150449.7
(22) Anmeldetag: 07.01.2019
(51) Int. Cl.: B41N 10/02, B41N 10/04, B41N 1/12, B41N 1/22

(54) **MEHRSCHICHTIGES FLÄCHENGEBILDE IN FORM EINES DRUCKTUCHES ODER EINER DRUCKPLATTE**
MULTILAYER FABRIC IN THE FORM OF A PRINTING SHEET OR A PLATE
STRUCTURE PLANE MULTICOUCHE SOUS LA FORME D'UN BLANCHET OU D'UNE PLAQUE D'IMPRESSION

(30) Priorität: 19.02.2018 DE 102018202492
(43) Veröffentlichungstag der Anmeldung: 21.08.2019
(73) Patentinhaber: ContiTech Elastomer-Beschichtungen GmbH, 30165 Hannover (DE)
(72) Erfinder: Löschner, Jens, 37120 Bovenden (DE); Raschdorf, Torsten, 37574 Einbeck (DE); Gnass, Markus, 37197 Hattorf am Harz (DE); Heise, Björn, 37083 Göttingen (DE)
(74) Vertreter: Continental Corporation

(56) Entgegenhaltungen:
- US-A1- 2012 103 216
- US-A1- 2015 090 397
- US-E- R E38 468

## Beschreibung

Die Erfindung betrifft ein mehrschichtiges Flächengebilde in Form eines Drucktuches oder einer Druckplatte, insbesondere für das Bedrucken von konischen oder zylindrischen Behältnissen aus zum Beispiel Kunststoff, Styropor, Pappe, Metall, etc. mit einer mehrlagigen Druckschicht aus wenigstens einem polymeren Werkstoff und wenigstens einer weiteren Schicht, wobei die einzelnen Schichten untereinander einen nicht zerstörungsfrei lösbaren Haftverbund bilden.

Drucktücher, wie bspw. in EP 0 191 779 B2 beschrieben, sind mehrschichtige Flächengebilde mit einer Druckschicht aus einem polymeren Werkstoff, wenigstens einer kompressiblen oder inkompressiblen Zwischenschicht und wenigstens einer Festigkeitsträgerschicht, bestehend aus einem textilen Flächengebilde, wobei die einzelnen Schichten untereinander einen nicht zerstörungsfrei lösbaren Haftverbund bilden. Der nicht zerstörungsfrei lösbare Haftverbund kann entweder durch geeignete Materialauswahl der einzelnen Schichten erzielt werden. Oder aber der Haftverbund wird über eine separate Haftschicht oder über einen Haftvermittler zwischen den einzelnen Schichten erzielt, siehe bspw. DE 20 2011 110 044 U1 oder GB 680,337 A.

Ein mehrschichtiges Flächengebilde in Form eines Drucktuches oder einer Druckplatte ist auch aus der US2012/103216 A1 bekannt.

Die mechanische Beanspruchung von Drucktuchoberflächen beim Bedrucken von konischen oder zylindrischen Behältnissen ist sehr hoch. Der Behälter wird bei Berührung mit der Drucktuchoberfläche beschleunigt und durch die konische Ausführung treten bei definierter Drehzahl unterschiedliche Oberflächengeschwindigkeiten entlang der Drucktuchoberfläche auf. Die Oberfläche ist dadurch lokal differierenden und sehr hohen mechanischen Kräften ausgesetzt.

Für das Bedrucken von konischen oder zylindrischen Bechern können geschliffene Offsetdrucktücher eingesetzt werden, die in Bezug auf Verschleiß und Druckqualität gravierende Nachteile aufweisen. Die Oberfläche weist dabei eine typische Schleifstruktur auf, die durch die Dickenkalibrierung durch Schleifen verursacht wird. Andere für diese Anwendung geeignetere Oberflächen (z.B. glatt, geprägt) sind nicht möglich.

Der Erfindung liegt nun die Aufgabe zu Grunde, ein mehrschichtiges Flächengebilde in Form eines Drucktuches oder einer Druckplatte, bereit zu stellen, das sich durch eine Verbesserung der Druckqualität und des Verschleißes beim Drucken von konischen oder zylindrischen Behältnissen auszeichnet.

Gelöst wird diese Aufgabe dadurch, dass das mehrschichtige Flächengebilde der eingangs genannten Art eine mehrlagige Druckschicht enthält, wobei die obere Lage, welche während des Druckvorgangs dem zu bedruckenden Objekt zugewandt ist, 40 bis 80 phr Butadienkautschuk (BR) und 20 bis 60 phr Butylkautschuk (IIR), und die untere Lage, welche während des Druckvorgangs dem zu bedruckenden Objekt abgewandt ist, 80 bis 100 phr Butylkautschuk (IIR), enthält.

Überaschenderweise wurde festgestellt, dass sich durch die mehrlagige, bevorzugt zweilagige, Gestaltung der Druckschicht für die Anwendung des mehrschichtigen Flächengebildes optimierte Eigenschaften ergeben.

Die untere Lage der Druckschicht enthält 80 bis 100 phr, bevorzugt 90 bis 100 phr, ganz besonders bevorzugt 100 phr Butylkautschuk (IIR). Bei dynamischer Belastung weist dieses IIR eine hohe Steifigkeit auf. Dies sorgt für eine optimale Farbübertragung auf das Substrat.

Die obere Lage der Druckschicht enthält 40 bis 80 phr, bevorzugt 60 bis 80 phr, Butadienkautschuk (BR), und 20 bis 60 phr, bevorzugt 20 bis 40, Butylkautschuk (IIR). Durch den IIR-Anteil ist eine optimale Anbindung an den Untergrund gegeben. Der BR - Anteil sorgt dabei für eine sehr hohe Verschleißfestigkeit, d.h. ein optimiertes Abriebverhalten.

Zudem weist BR eine sehr hohe Elastizität auf, so dass sich die Oberfläche des Drucktuches beim Auftreffen auf die Drucktuchoberfläche elastisch verformen kann. Der Druckverformungsrest der oberen Lage der Druckschicht ist zudem so gering, dass eine bleibende Verformung insbesondere durch die teilweise vorhandenen Becherkanten vermieden wird.

Die obere Lage der Druckschicht kann hierbei in einer besonders bevorzugten Ausführungsform geprägt sein und weist dadurch eine glatte, samtartige Oberflächenstruktur auf, die für eine homogene Farbübertragung speziell auf glatten Oberflächen sorgt.

Die untere Lage und die obere Lage enthalten neben den genannten Kautschuktypen noch weitere Inhaltsstoffe. Bei diesen weiteren Inhaltsstoffen handelt es sich in der Regel um Vernetzer oder ein Vernetzersystem (Vernetzungsmittel und Beschleuniger), Füllstoffe und/oder Verarbeitungshilfsmittel und/oder Weichmacher und/oder Alterungsschutzmittel sowie gegebenenfalls weitere Zusatzstoffe (z.B. Farbpigmente). Diesbezüglich wird auf den allgemeinen Stand der Kautschukmischungstechnologie verwiesen.

In einer besonders bevorzugten Ausführungsform besteht die Druckschicht aus zwei Lagen, nämlich der genannten unteren Lage und der genannten oberen Lage. Beide Lagen befinden sich vorzugsweise auch in direktem Kontakt zueinander, d.h. ohne dass sich eine zusätzliche Lage dazwischen befindet.

Erfindungsgemäß enthält das mehrlagige Flächengebilde wenigstens eine weitere Schicht. Hierbei handelt es sich bevorzugt um eine Festigkeitsträgerschicht, die einlagig oder mehrlagig ausgebildet sein kann.

Bevorzugt ist die Festigkeitsträgerschicht mehrlagig ausgebildet und besteht aus zwei oder drei Lagen, die gleich oder verschieden voneinander sein können.

Bevorzugt handelt es sich bei den einzelnen Lagen innerhalb der Festigkeitsträgerschicht dabei um jeweils ein Gewebe, welches aus Kettfäden und Schußfäden besteht.

Das Material für die Kettfäden und / oder die Schußfäden ist bevorzugt ausgewählt aus der Gruppe, bestehend aus Polyester und / oder Polyoxadiazol (POD) und / oder Polyetherimid (PEI) und / oder m-Aramid und / oder p-Aramid und / oder Metall und / oder Glas und / oder Keramik und / oder Gestein und / oder Carbon und / oder modifiziertes Polyester (mod PES) und /oder modifizierte Viskose und / oder Polyamid (PA), z.B. PA6, PA6.6, PA11, PA12, PA6.10, PA6.12, und / oder Copolyamide und / oder höher schmelzende Polyester (PES) und / oder Rayon und / oder Polyethylentherephthalat (PET) und / oder Baumwolle und / oder Zellwolle und / oder Polyvinylalkohol (PVAL) und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO). Die genannten Materialien können hierbei alleine oder in Kombination mit wenigstens einem weiteren Material als Hybrid eingesetzt werden.

Aufgrund der geringen und stabilen Dehnung ist die Verwendung von Baumwolle besonders bevorzugt.

Bei der weiteren erfindungsgemäß vorhandenen Schicht des mehrlagigen Flächengebildes kann es sich ebenso um eine zusätzliche Schicht handeln, die bevorzugt aus wenigstens einem polymeren Werkstoff aufgebaut ist.

Der polymere Werkstoff kann dabei ein elastomerer Werkstoff auf der Basis einer vulkanisierten Kautschukmischung sein, die eine unverschnittene Kautschukkomponente oder einen Kautschukkomponentenverschnitt und übliche Mischungsingredienzien enthält. Als Kautschukkomponenten sind insbesondere zu nennen: Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder Fluorierter Methylsilikonkautschuk (MFQ)und / oder Perfluorinierter Propylen-Kautschuk (FFPM) und/ oder Perfluorcarbon-Kautschuk (FFKM) und / oder Poyurethan (PU).

Auch der Einsatz eines Verschnittes, insbesondere in Verbindung mit einem der vorgenannten Kautschuktypen, beispielsweise ein NR/BR-Verschnitt, ist möglich.

Von besonderer Bedeutung, insbesondere für Drucktücher, sind: HNBR, EPDM, oder NBR.

Die üblichen Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoff (z.B. Farbpigmente). Diesbezüglich wird auf den allgemeinen Stand der Kautschukmischungstechnologie verwiesen.

Handelt es sich bei der zusätzlichen Schicht um eine kompressible Schicht, so sind zusätzlich Blähmittel und/ oder Mikrohohlkugeln, zur Ausbildung von Poren für die gute Kompressibilität, in der Kautschukmischung vorhanden.

Das mehrschichtige Flächengebilde kann somit bevorzugt aus einer mehrlagigen Druckschicht und einer Festigkeitsträgerschicht oder aus einer mehrlagigen Druckschicht und einer kompressiblen Schicht oder aus einer mehrlagigen Druckschicht und einer Festigkeitsträgerschicht und einer kompressiblen Schicht bestehen.

Das erfindungsgemäße mehrschichtige Flächengebilde in Form eines Drucktuches oder einer Druckplatte kann ebenso als flexibler Behälter, Schutzanzug, Rettungsinselstoff, Schlauch, Luftfederbalg, Antriebsriemen, Fördergurt, Faltenbalg ausgebildet sein. Bevorzugt handelt es sich allerdings bei dem mehrschichtigen Flächengebilde um ein Drucktuch, wie es insbesondere für das Bedrucken von konischen und zylindrischen Behältnissen benötigt wird.

### Bezugszeichenliste

### (Teil der Beschreibung)

- 10: Drucktuch
- 1: obere Lage der Druckschicht
- 2: untere Lage der Druckschicht
- 3: mehrlagige Festigkeitsträgerschicht
- 4: zusätzliche Schicht aus polymerem Werkstoff

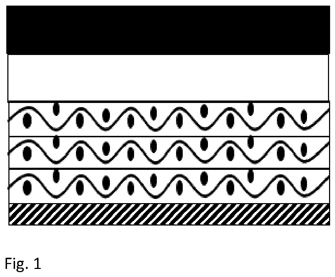

## Patentansprüche

1. Mehrschichtiges Flächengebilde (10) in Form eines Drucktuches oder einer Druckplatte enthaltend eine mehrlagige Druckschicht (1,2) aus wenigstens einem polymeren Werkstoff und wenigstens eine weitere Schicht (3, 4), wobei die einzelnen Schichten untereinander einen nicht zerstörungsfrei lösbaren Haftverbund bilden, **dadurch gekennzeichnet, dass** die obere Lage (1), welche während des Druckvorgangs dem zu bedruckenden Objekt zugewandt ist, 40 bis 80 phr Butadienkautschuk (BR) und 20 bis 60 phr Butylkautschuk (IIR), und die untere Lage (2), welche während des Druckvorgangs dem zu bedruckenden Objekt abgewandt ist, 80 bis 100 phr Butylkautschuk (IIR), enthält.

2. Mehrschichtiges Flächengebilde (10) nach Anspruch 1, **dadurch gekennzeichnet, dass** die obere Lage (1) 60 bis 80 phr BR und 20 bis 40 phr IIR enthält.

3. Mehrschichtiges Flächengebilde (10) nach Anspruch 1 oder 2, **dadurch gekennzeichnet, dass** untere Lage (2) 100 phr IIR enthält.

4. Mehrschichtiges Flächengebilde (10) nach einem der Ansprüche 1 bis 3, **dadurch gekennzeichnet, dass** die Druckschicht aus zwei Lagen, d.h. der unteren Lage (2) und der oberen Lage (1), besteht.

5. Mehrschichtiges Flächengebilde (10) nach Anspruch 4, **dadurch gekennzeichnet, dass** sich die untere Lage (2) und die obere Lage (1) ohne eine zusätzliche Zwischenlage in direktem Kontakt zueinander befinden.

## Claims

1. Multilayer sheet material (10) in the form of a printing blanket or of a printing plate which comprises a multiple-ply printing layer (1,2) made of at least one polymeric material and which comprises at least one other layer (3, 4), where the individual layers form, with one another, an adhesive bond which is not amenable to nondestructive separation, **characterized in that** the upper ply (1), which during the printing procedure faces toward the object to be printed, comprises from 40 to 80 phr of butadiene rubber (BR) and from 20 to 60 phr of butyl rubber (IIR), and the lower ply (2), which during the printing procedure faces away from the object to be printed, comprises from 80 to 100 phr of butyl rubber (IIR).

2. Multilayer sheet material (10) according to Claim 1, **characterized in that** the upper ply (1) comprises from 60 to 80 phr of BR and from 20 to 40 phr of IIR.

3. Multilayer sheet material (10) according to Claim 1 or 2, **characterized in that** the lower ply (2) comprises 100 phr of IIR.

4. Multilayer sheet material (10) according to any of Claims 1 to 3, **characterized in that** the printing layer consists of two plies, i.e. the lower ply (2) and the upper ply (1).

5. Multilayer sheet material (10) according to Claim 4, **characterized in that** the lower ply (2) and the upper ply (1) are in direct contact with one another with no additional intervening ply.

## Revendications

1. Structure plane multicouche (10) sous forme d'un blanchet d'impression ou d'une plaque d'impression contenant une couche d'impression multicouche (1,2) composée d'au moins un matériau polymérique et d'au moins une couche supplémentaire (3, 4), les couches individuelles formant l'une avec l'autre un composite d'adhérence qui n'est pas détachable sans destruction, **caractérisée en ce que** la couche supérieure (1), qui est orientée vers l'objet à imprimer pendant le processus d'impression, contient 40 à 80 phr de caoutchouc de butadiène (BR) et 20 à 60 phr de caoutchouc de butyle (IIR), et la couche inférieure (2), qui est orientée à l'opposé de l'objet à imprimer pendant le processus d'impression, contient 80 à 100 phr de caoutchouc de butyle (IIR).

2. Structure plane multicouche (10) selon la revendication 1, **caractérisée en ce que** la couche supérieure (1) contient 60 à 80 phr de BR et 20 à 40 phr d'IIR.

3. Structure plane multicouche (10) selon la revendication 1 ou 2, **caractérisée en ce que** la couche inférieure (2) contient 100 phr d'IIR.

4. Structure plane multicouche (10) selon l'une quelconque des revendications 1 à 3, **caractérisée en ce que** la couche d'impression est constituée de deux couches, c'est-à-dire la couche inférieure (2) et la couche supérieure (1).

5. Structure plane multicouche (10) selon la revendication 4, **caractérisée en ce que** la couche inférieure (2) et la couche supérieure (1) se trouvent en contact direct l'une avec l'autre sans couche intermédiaire supplémentaire.
